(19) Europäisches Patentamt
European Patent Office
Office européen des brevets

(11) **EP 4 468 551 A1**

(12) **EUROPEAN PATENT APPLICATION**

(43) Date of publication:
**27.11.2024 Bulletin 2024/48**

(51) International Patent Classification (IPC):
***H02J 7/00*** (2006.01)

(21) Application number: **23174507.6**

(22) Date of filing: **22.05.2023**

(52) Cooperative Patent Classification (CPC):
**H02J 7/00047; H02J 7/0071; H02J 7/007194;**
**H02J 7/00038**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Rimac Technology LLC**
**10431 Sveta Nedelja (HR)**

(72) Inventors:
• **Li, Shen**
**Havant, PO9 1NE (GB)**
• **Szemberg O'Connor, Teddy**
**London, E3 5EG (GB)**
• **Madabattula, Ganesh**
**Coventry, CV1 4BH (GB)**
• **Dilov, Wasim Sarwar**
**10000 Zagreb (HR)**

(74) Representative: **Hoffmann Eitle**
**Patent- und Rechtsanwälte PartmbB**
**Arabellastraße 30**
**81925 München (DE)**

(54) **FAST BATTERY CHARGING**

(57)     A method of charging a battery comprising one or more rechargeable battery cells, the method comprising the steps of obtaining information on a cell series type of the rechargeable battery cell; obtaining a setpoint input on volume-average setpoints (SPavgT, SPavgD) and gradient setpoints (SPgradT, SPgradD) for both a temperature and a degradation; obtaining a model current-versus-time profile for the specific cell series type, said model being optimized for any one of a charging time, an internal temperature, a degradation accumulation, an internal degradation gradient, and an internal temperature of a battery cell of said cell type, and said model current-versus-time profile having at least one of said setpoints as a parameter; applying a charging current to the rechargeable battery cell according to a current-versus-time profile based on the obtained model current-versus-time profile and the obtained setpoint input.

Fig. 1

**Description**

Technical field

The present invention relates to charging batteries, specifically in the context of rechargeable batteries as a power source for vehicles. In particular, the present invention thus relates to charging electric vehicles and energy storage applications. The present invention generally aims at decreasing the charging time while considering battery cell temperature and health.

Background

Rechargeable batteries and the involved technologies are of great interest driven by the transition to electric mobility, to decentralized supply of electric power and others. The involved technologies include cell chemistry, cell module layout, and charging concepts to name just a few. The technologies for the latter charging concepts include in turn hardware and circuitry design for the charging infrastructure as well as controlling such infrastructure for obtaining efficient energy use and distribution. A further aspect is time efficiency which usually equates to reducing the required time for charging a battery as much as possible.

The limitations imposed on reducing the charging time not only resides on the power supply side but also often on the side of the battery cells themselves. As battery charging involves chemical and physical processes within the cells, aspects including heat generation, heat dissipation, ventilation, degradation, and the like come into play. Usually, the faster a battery cell is charged, the larger are the involved currents, the generation of heat, gassing or disadvantageous deterioration effects.

Conventional concepts include the approximating of algorithms for fast charging Lithium-ion batteries based on electrochemical battery models. Such solutions usually provide relatively fast charging and considering effects such as cell temperature and degradation. However, the conventional models are so far not capable of efficiently considering applicable aspects and external, but potentially important, factors. There is therefore a need for improved concepts for fast charging batteries that provide for a yet reduced charging time while maintaining any disadvantageous effects or degradation at acceptable levels.

Summary

The mentioned drawbacks are remedies by the subject-matter of the independent claims. Further preferred embodiments of the present invention are defined in the dependent claims.

According to one embodiment of the present invention there is provided a method of charging a rechargeable battery cell comprising the steps of: obtaining information on a cell series type of the rechargeable battery cell; obtaining a setpoint input on volume-average setpoints and gradient setpoints for both a temperature and a degradation; obtaining a model current-versus-time profile for the specific cell series type, said model being optimized for any one of a charging time, an internal temperature, a degradation accumulation, an internal degradation gradient, and an internal temperature of a battery cell of said cell type, and said model current-versus-time profile having at least one of said setpoints as a parameter; applying a charging current to the rechargeable battery cell according to a current-versus-time profile based on the obtained model current-versus-time profile and the obtained setpoint input.

Brief description of the drawings

Embodiments of the present invention, which are presented for better understanding the inventive concepts and which are not to be seen as limiting the invention, will now be described with reference to the Figures in which:

Figure 1            shows a schematic view of an environment for fast charging according to an embodiment of the present invention;

Figures 2A to 2C    show schematic views of exemplary and comparative current-versus-time profiles applicable during charging, fast charging, and charging according to embodiments of the present invention;

Figure 3            shows schematically the modelling of cells according to embodiments of the present invention;

Figure 4            shows a schematic view of a workflow involved for obtaining a model according to embodiments of the present invention; and

Figure 5                 shows a schematic view of a method embodiment of the present invention;

Detailed description

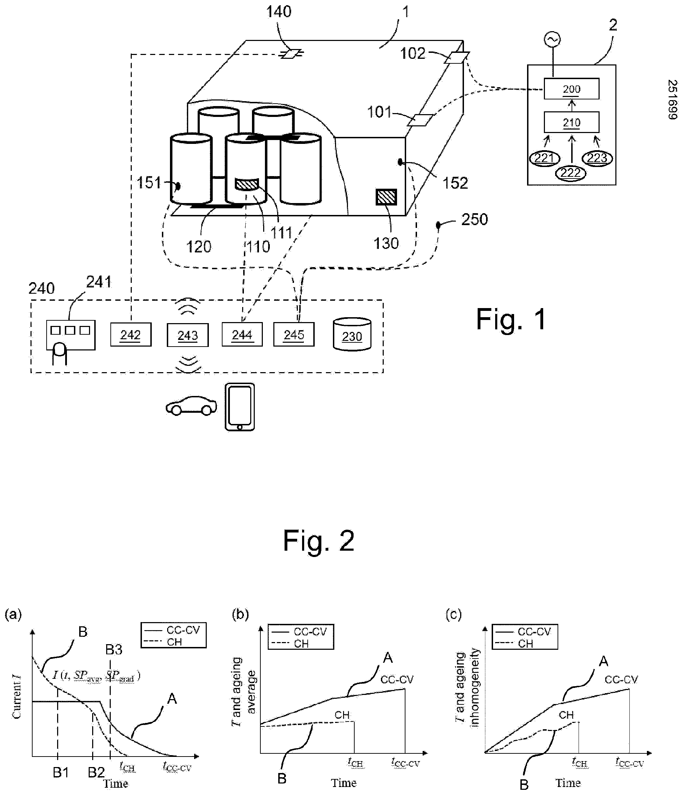

Figure 1 shows a schematic view of an environment for fast charging according to an embodiment of the present invention. Specifically, there is shown a battery 1 and a charger 2, the battery 1 being subject to fast charging by the charger 2. The battery 1 may be a battery module or battery pack comprising a plurality of individual rechargeable battery cells (or short: "cells") 110 which are interconnected via one or more connectors 120 in order to obtain a series and/or parallel connection of the cells 110. The overall battery circuit is accessible via battery terminal 101, 102, to which power converters, motors, loads, etc. are connected. As the present invention is mainly concerned with charging the battery 1, the elements involved in discharging (e.g. vehicle motor(s), power controls, power converters, transmission and distribution systems etc.) are omitted in this Figure. In general, the embodiments of the present invention may find advantageous applications in electric or hybrid vehicles, stationary power storage, (local or decentralized) power plants in optional combination with solar panels, wind generators or other energy sources.

The cells 110 can be of any suitable type, including cylindrical cells, pouch cells, prismatic cells, and the like. The cells 110 can, however, not only be characterized by said cell type but also by a so-called cell series type which indicates the model or series type of a cell. The cell series type can be in the form of an identification number, type number or name, product number or name, European article number (EAN), stock keeping unit (SKU) number and the like. In this way, any information on such a cell series type allows for retrieving the characteristics for that cell series type which can then be assumed to be the same, or similar within manufacturing or otherwise to be expected tolerances, for any cell of the same sell series type.

The charger 2 comprises a charging power supply 200 that is configured to output a charging power at a controlled output voltage and with a controlled output current. When the charging power supply 200 is connected to the battery, a charging current can be applied to the individual cells 110 of the battery through the respective circuit in the battery 1. The charger 2 further comprises a control 210 that controls the charging power supply 200 so as to provide charging power at a given target current and/or voltage. The control 210 can receive various inputs 221, 222, 223 in the form of parameters, input information, measurement values and the like. The control 210 can further employ a model which provides guidance to the control of the output based on input parameters or information, environment data, measured values and other live data. The model and/or a current-versus-time profile derived therefrom may be stored or accessed from a data store 230, which may store one or more current-versus-time profiles for specific cell series types in the form of, for example, a look-up table, a parameterized function, and/or parameters. In general, the model and/or current-versus-time profile can be implemented, i.e. stored or retrieved and applied, on the charging side that includes any one of a battery charger, a charging infrastructure, a battery management system (BMS), and the like.

More specifically, the control 210 is configured to obtain information 221 on the cell series type of the rechargeable battery cell to be charged. For example, this information 221 can be provided by a one of possible input units 240 which are described here for the case of the information 221 on the cell series type but which are likewise suitable to provide any other information to the control 210. As shown, a first input unit 241 may be a data store that pre-stores the information in a memory so that the control 210 can access the required information whenever required, i.e. in the context of a charging cycle to be performed.

A manual input 241 in the form of a touch-pad, keyboard or button(s) allow a user to provide input corresponding or indicating the required information. The user may refer at this point to a label 111 of the individual cells 110 carrying information that corresponds or can be traced to the cell series type (e.g. in the form of a number, a machine-readable bar-code or also a serial number which allows identification of the cell series type from a look-up database). Also, the battery 1 may comprise a label 130 that carries information that corresponds or can be traced to the cell series type of the cells 110 inside the battery 1.

An input unit may also be provided in the form of an interface 243 which may communicate with a memory 140 of the battery 1 which stores such information. The information can be read out by the interface 243 over the power connection to the battery 1, a separate data line, or also in a wireless fashion when the interface 243 can communicate with the battery 1, a cell 100, the vehicle, or a user's personal computing device (e.g. smartphone) via any suitable protocol, incl. Bluetooth, Wi-Fi, NFC, and the like. Yet further, an optical scanner 244 may read an optical code, e.g. a machine-readable code on label 111 or 130.

The control 210 is further configured to obtain setpoint input 222 on volume-average setpoints (SPavgT, SPavgD) and gradient setpoints (SPgradT, SPgradD) for both a temperature and a degradation. Specifically, this setpoint input may point to a series of setpoint values which respectively stand for a relatively mild to a relatively hard control, wherein, in turn, relatively mild setpoints may result in relatively low heat generation and temperature rise and/or relatively low degradation during charging, whereas relatively hard setpoints may result in relatively high heat generation and temperature rise and/or relatively high degradation during charging.

The setpoint input may be obtained automatically, preferably also in connection with the information 221 on the cell series type, or may be obtained for a specific charging cycle from a user by one of the mentioned input means 240. In this way, the user can still tune the charging time for an individual charging cycle, allowing for a relatively mild charging cycle when more time is available, while reducing the charging time even more when a harder approach implying more thermal and/or degradation stress to the cells is justified. Specifically, this input may be obtained by means of the already discussed manual input 241 or the interface 243, which in such a case preferably communicates with a user's device or the control system of the vehicle in which the battery 1 is built in.

The control 210 is further configured to obtain a model current-versus-time profile for the specific cell series type. The model is optimized for any one of a charging time, an internal temperature, a degradation accumulation, an internal degradation gradient, and an internal temperature of a battery cell of said cell type, and said model current-versus-time profile having at least one of said setpoints as a parameter. Generally, the figures relating to degradation such as the corresponding variables of the degradation accumulation and/or the degradation gradient, can be calculated by the model in real-time and the charging profile can be adjusted to minimize at least one of the degradation variables. By minimizing the degradation variable(s), the lifetime of the battery can be substantially prolonged while obtaining a much faster charging speed.

Generally, the model current-versus-time profile is derived from a model in the sense that it can be first generated a model and from that model a current-versus-time profile is derived. The derived current-versus-time profile thus reflects the findings from the model. Advantageously, the model does not need to be generated when or before the fast charging according to the embodiments of the present invention is to be performed. Rather, the model may be generated once for a specific cell series type, from that model then model current-versus-time profile may be derived and obtained, for example, in the form of a look-up-table, i.e. a list of parameters that indicate a target current for a given time. In other words, the current profile can be generated through running the model given the volume-average setpoints (SPavgT, SPavgD) and gradient setpoints (SPgradT, SPgradD). Under different ambient temperature and initial battery SoC, the current profiles can be formed as corresponding look-up-tables or a set of look-up-tables or a set of parameters controlling the behaviour of a function that reproduces, at least to some degree of fidelity, the desired profile.

Further, the control 210 is configured to control the charging power supply 200 so as to apply, directly or indirectly, the charging current to the rechargeable battery cells according to a current-versus-time profile based on the obtained model current-versus-time profile and the obtained setpoint input. The charging current is meant to be applied directly if the charging power supply 200 has direct connection to a cell or can at least directly influence the current such as in a series connection of individual cells. The charging current is meant to be applied indirectly if the charging power supply 200 does not directly govern the current through a cell but if it can be assumed that the current through an individual cell corresponds to the current applied to the battery 1 (e.g. in a parallel connection of cells).

The control 210 may also be configured to control the charging power supply 200 so as to apply the charging current also according to a measured cell surface temperature. In a sense, the current is thus not only governed by the time and the current-versus-time profile but also based on the measured cell surface temperature. For example, the profile may be provided for different cell surface temperatures or ranges thereof. Also, the current taken from the current-versus-time profile may be adjusted based on the measured cell surface temperature following a given function. In such embodiments, a measurement interface 245 may be employed for receiving a sensor output from a temperature sensor 151 or 152 at a cell 110 or at the battery 1.

The control 210 may also be configured to control the charging power supply 200 so as to apply the charging current also according to a measured ambient temperature. In a sense, the current is thus not only governed by the time and the current-versus-time profile but also based on the measured ambient temperature. For example, the profile may be provided for different ambient temperatures or ranges thereof. Also, the current taken from the current-versus-time profile may be adjusted based on the measured ambient temperature following a given function. In such embodiments, a measurement interface 245 may be employed for receiving a sensor output from an ambient temperature sensor 250. It is to be noted that ambient temperature may pose limits to the fast charging current and also ambient temperature is often time-varying and variable. In a way, embodiments of the present invention consider real-time ambient temperature and/or thermal boundary temperature obtained by embedded thermocouples and thus may make real-time response to a charging profile.

Figures 2A to 2C show schematic views of relevant and comparative time profiles according to embodiments of the present invention. Specifically, Figure 2A shows a current-versus-time profile A for conventional constant-current, constant-voltage charging, in which for an initial time period the charging current is kept constant (CC) and for a follow-up time period the charging voltage is kept constant (CV) during which the current correspondingly decreases. As comparison thereto, the current-versus-time profile B according to an embodiment of the present invention is obtained from an applicable model as explained elsewhere in the present disclosure. In any way, it can be seen the charging time can be significantly less than in the CC-CV charging profile. The optimised charging current in the latter half charging period can be lower than in the front half. This is to avoid the high current at high SoC which leads to lithium-plating.

The fast-charging strategy according to embodiments of the present invention, as reflected in the exemplary time-varying current profile B in Figure 2A applies an optimized charging current profile and thus the charging time tCH for the proposed charging scheme is reduced in comparison to the charging time tCC-CV for traditional CC-CV scheme. This approach can be referred to as also a "health-aware charging strategy" is enabled by a 3D battery simulation toolbox of a model according to an embodiment of the present invention. In a way, the respective embodiments may consider capturing inhomogeneity of battery internal temperature and degradation. The final fast charging solution may be further optimized through constraints of charging time, internal temperature, degradation accumulation and internal gradients through 3D electrothermal-degradation battery model. The fast charging strategy profiles may be generated under different ambient temperature to response to the monitored real-time cell surface temperature. Further, the volume-average setpoint SPavg and a gradient setpoint SPgrad for both temperature and degradation may be user inputs.

Figure 2B shows the degradation modes loss of active material (LAM) and loss of lithium inventory (LLI) for the conventional CC-CV scheme, see trace A, and according to embodiments of the present invention, see trace B. Figure 2C shows the degradation modes loss inhomogeneity for the conventional CC-CV scheme, see trace A, and according to embodiments of the present invention, see trace B.

Generally, the model should provide the ability to correctly predict the multi physics behaviour of Lithium-ion batteries and related chemistries. It may consider a graphical user interface (GUI) for a user to create a battery model in a convenient way and a general modelling framework covering multiple disciplines. Conventional approaches include coding frameworks such as "PyBaMM", "DandeLiion", "DUALFOIL", "LIONSIMBA", "MSMD", and some more. However, all of these codes solve electrochemical models with complex differential algebraic equations (DAE), and they are computationally expensive in nature. A significant number of fundamental parameters in the equations may also be needed and most of these codes are based on 1D or 2D model assumptions, i.e., discretisation may be sacrificed for lower computational cost.

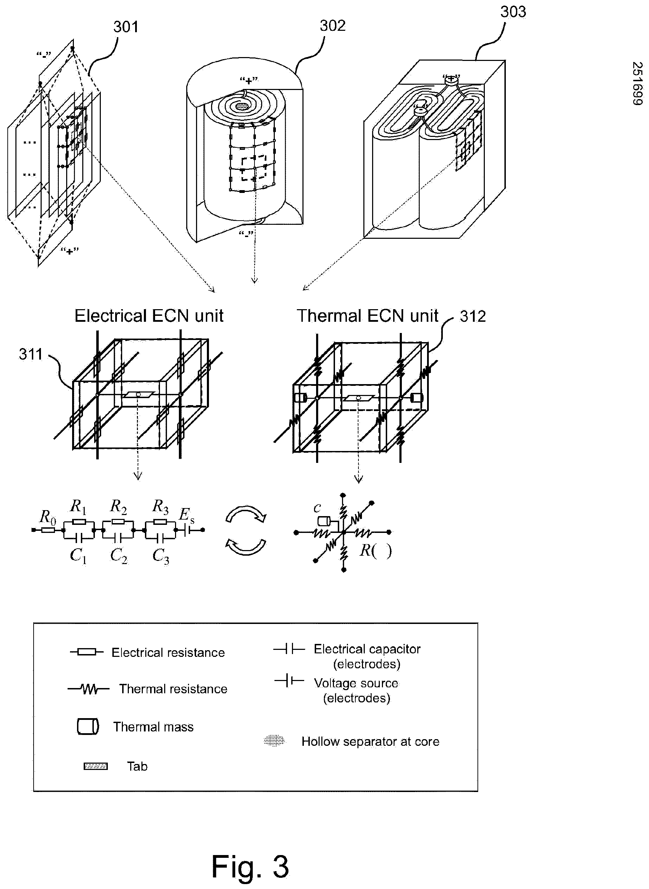

Figure 3 shows schematically the modelling of cells according to embodiments of the present invention. In the figure the symbols are assigned respectively to the thermal resistance of aluminum, the thermal resistance of copper, the electrical resistance of the electrodes, the thermal resistance of the electrodes, the thermal mass of aluminum, the thermal mass of copper, the electrical capacitor/capacitance of the electrodes, the thermal mass of the electrodes, the electrical resistance of aluminum, the electrical resistance of copper, the voltage source of the electrodes, the tab, and the hollow separator at core. Specifically, the model of the present embodiment considers an equivalent circuit network (ECN) battery modelling framework and provides a prediction on 3D electro-thermal behaviour of batteries of different form factors, including pouch, cylindrical and prismatic cells. The model may consider the detailed internal structures including any one of the battery jellyroll, anode electrode, cathode electrode, current collector, metal can or cell housing, and tab or cell terminal configuration. The schematic of the distributed ECN model for a pouch cell 301, cylindrical cell 302 and prismatic cell 303 and prismatic cell 303 as examples, are shown in Figure 3. In this modelling framework, the whole cell is distributed into coupled electrical and thermal ECN units 311, 312.

Within each ECN unit, current collector and electrodes are considered, and they have different electrical and thermal properties. As shown, for the electrical model in the electrode domain, the local ECN includes a voltage source Es representing the Open Circuit Voltage (OCV), a series resistance R0 representing the instantaneous ohmic resistance, and a set of Resistor-Capacitor (RC) branches, Ri and Ci that capture the transient response. According to Kirchhoff's voltage law, the terminal voltage $\Delta\Phi E$l of the electrode pair unit is given by Eq. (a), where Ii is the branch current in the resistor Ri and I is the current in resistor R0. For the current collector components, charge balance conservation is considered as in Eq. (b), where $\sigma$ is the conductivity of the current collector and $\Phi$CC its local potential.

In all, the model may consider one or more of the coupled equations of electro-thermal problems defined by Eq. (a-f):

$$\Delta\phi^{\mathrm{EI}} = E_s - \sum_{i=1}^{3} R_i I_i - R_0 I \qquad (a)$$

$$\sigma \nabla \cdot (\nabla \phi^{\mathrm{CC}}) = \sigma \frac{\partial^2 \phi^{\mathrm{CC}}}{\partial x^2} + \sigma \frac{\partial^2 \phi^{\mathrm{CC}}}{\partial y^2} = 0 \qquad (b)$$

$$\rho c \frac{\partial T}{\partial t} = \lambda_x \frac{\partial^2 T}{\partial x^2} + \lambda_y \frac{\partial^2 T}{\partial y^2} + \lambda_z \frac{\partial^2 T}{\partial z^2} + q \qquad (c)$$

$$Q_{\mathrm{conv}} = h(T - T_{\mathrm{amb}}) \qquad (d)$$

$$q^{\mathrm{EI}} = \left( \sum_{i=1}^{3} I_i^2 R_i + I^2 R_0 + IT \frac{dE_s}{dT} \right) / V^{\mathrm{EI}} \qquad (e)$$

$$q^{\mathrm{CC}} = \left( \frac{1}{2} \sum_{i=1}^{4} \left( I_i^{\mathrm{CC}} \right)^2 R_i^{\mathrm{CC}} \right) / V^{\mathrm{CC}} \qquad (f)$$

The equations may be discretized by a finite difference method. For the thermal model in the electrode component, the anode, cathode and separator are lumped into one bulk material (electrode pair) in each thermal ECN 312. The heat transfer equation for the electrode pair, and current collector materials are given by Eq. (c), where $\rho$, c, $\lambda$ are the mass density, heat capacity, heat transfer coefficient and temperature of the electrodes pair, and $\lambda x$, $\lambda y$, and $\lambda z$ are the corresponding heat transfer coefficients in the three directions, and q is the heat source.

For current collector domain, Eq. (c) is still applied with thermal properties of aluminum for positive current collector foil or copper for negative one. For the metal can outside, the heat generation source may be ignored, i.e., the q term in Eq. (c) may be set to 0. The code accepts two types of thermal boundary conditions: convective boundary condition and Dirichlet-type fixed boundary condition. A convection boundary condition is imposed as Eq. (d), where Qconv is the heat transferred due to convection, h is convective heat transfer coefficient, T is the temperature at the boundary and $T$amb is the ambient temperature. Dirichlet-type temperature boundary condition have also been implemented, as well as combinations of convection and Dirichlet for each of the surfaces of the metal can.

The electrical model and thermal model may be fully coupled, i.e., the electrical parameters (resistance, capacitance and OCV) may be a function of temperature, while heat generation from the electrical model contributes to the heat source of the thermal model. The overall heat source qEl for the electrode pair is the sum of reversible and irreversible heat as expressed in Eq. (e), where VEl is the electrode pair volume in each element. The heat source qCC for current collector is written as Eq. (f), where ICCi and RCCi are the current and resistance in the aluminum or copper foil domains, as shown in Fig. 3, while VCC is the current collector volume. The ECN model may thus describe a temporal and spatial evolution of various variables of interest such as current density and temperature, for a given load and thermal management choice.

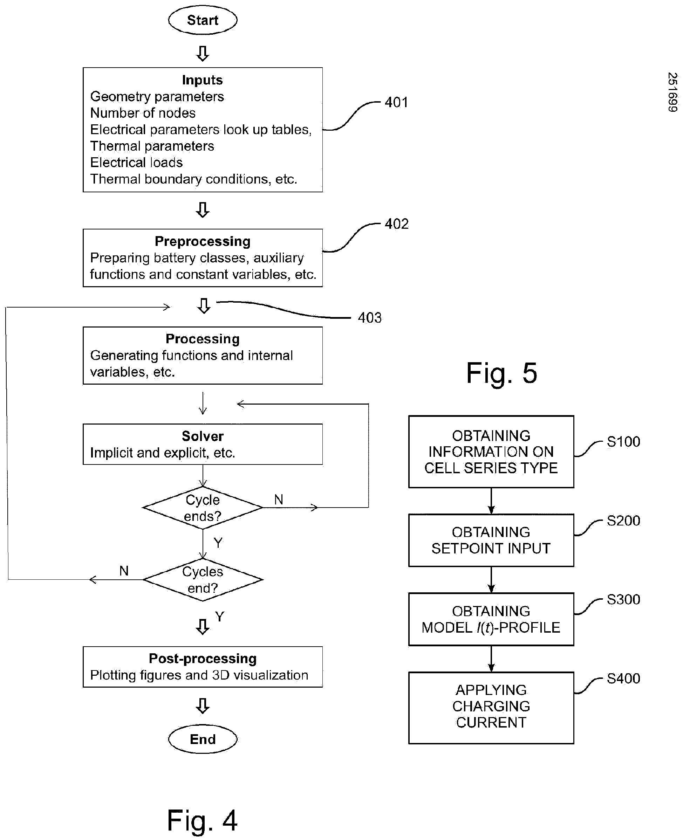

Figure 4 shows a schematic view of a workflow involved for obtaining a model according to embodiments of the present invention. In an input stage 401, the simulation setup are defined, such as geometry dimensions, discretization, electrical and thermal parameters, and boundary conditions. In a preprocessing stage 402, the classes for the applicable battery type (e.g., cylindrical cell, pouch cell, etc.) are invoked according to the operator inputs (note that the operator conducting the simulation and generation of the model may not necessarily the same as the user mentioned elsewhere in the present disclosure and who conducts charging). Auxiliary functions and variables which will remain unchanged in the entire simulation may be generated at 403 here before the loop iteration.

This manipulation will accelerate the simulation speed. Then the solutions of the equations are output by the solver. The code provides both explicit solver and implicit solver. Both solvers are self-coded and the implicit one may use for example the scipy.sparse.linalg.spsolve function from the python Scipy package. There are two iteration loops. The first loop is for single test profile, e.g., the constant current discharge or drive cycle simulation will be executed within this loop.

Simulation involving cycling will be executed by the second iteration loop. After the simulation, the results will be post-processed to make plots and 3D visualization according to the user inputs. In an embodiment, the charging side in the exemplary form of a BMS can read real-time information such as SoC and temperature. This information can then be compared with the look-up table to obtain the charging current. As a result, the model (current profile) can be calculated offline using for example the python toolbox PyECN and look-up table. The output of the model can be created and implemented in, for example, the BMS where also the control and live comparison of the actual values and parameters to their respective target values can be carried out.

Figure 5 shows a schematic view of a method embodiment of the present invention. Specifically, the method embodiments are for charging a battery comprising one or more rechargeable battery cells, the method comprising a step S100 of obtaining information on a cell series type of the rechargeable battery cell; a step S200 of obtaining a setpoint input on volume-average setpoints (SPavgT, SPavgD) and gradient setpoints (SPgradT, SPgradD) for both a temperature and a degradation; a step S300 of obtaining a model current-versus-time profile for the specific cell series type, said model being optimized for any one of a charging time, an internal temperature, a degradation accumulation, an internal degradation gradient, and an internal temperature of a battery cell of said cell type, and said model current-versus-time profile having at least one of said setpoints as a parameter; and a step S400 of applying a charging current to the rechargeable battery cell according to a current-versus-time profile based on the obtained model current-versus-time profile and the obtained setpoint input.

Embodiments of the present invention may generally consider gradients in the internal temperature or degradation. This may be specifically considered by the model using 3D electrothermal-degradation coupled battery model as explained in the present disclosure. Further, fixed initial ambient temperature/thermal boundary conditions can be avoided and in all non-uniform internal states in the cells can be appropriately captured and controlled, especially in the context of temperature and degradation. Specifically, flexible thermal boundary conditions can be considered.

Although detailed embodiments have been described, these only serve to provide a better understanding of the invention defined by the independent claims and are not to be seen as limiting.

## Claims

1. A method of charging a battery comprising one or more rechargeable battery cells, the method comprising the steps of:

   obtaining information on a cell series type of the rechargeable battery cell;
   obtaining a setpoint input on volume-average setpoints (SPavgT, SPavgD) and gradient setpoints (SPgradT, SPgradD) for both a temperature and a degradation;
   obtaining a model current-versus-time profile for the specific cell series type, said model being optimized for any one of a charging time, an internal temperature, a degradation accumulation, an internal degradation gradient, and an internal temperature of a battery cell of said cell type, and said model current-versus-time profile having at least one of said setpoints as a parameter;
   applying a charging current to the rechargeable battery cell according to a current-versus-time profile based on the obtained model current-versus-time profile and the obtained setpoint input.

2. The method according to claim 1, further including a step of generating the model for the specific cell series type.

3. The method according to claim 2, further including a step of deriving the model current-versus-time profile from the generated model.

4. The method according to any one of claims 1 to 3, wherein the model includes simulating a rechargeable battery cell of a given cell series type by means of an equivalent circuit network, ECN, comprising an electrical ECN unit and a thermal ECN unit.

5. The method according to claim 4, wherein an electrical ECN unit includes a voltage source, a series resistance and a set of resistor-capacitor branches.

6. The method according to claim 4 or 5, wherein a thermal ECN unit includes a mass density, a heat capacity, a heat transfer coefficient, and an electrode pair temperature.

7. The method according to any one of claims 4 to 6, wherein the electrical ECN unit and thermal ECN unit are coupled.

8. The method according to any one of claims 1 to 7, wherein the model considers any one of an internal structure of a rechargeable battery cell of a given cell series type, a housing of rechargeable battery cell of a given cell series type, and a terminal configuration of rechargeable battery cell of a given cell series type.

9. The method according to any one of claims 1 to 8, further comprising a step of measuring a cell surface temperature and applying said charging current to the rechargeable battery cell also according to the measured cell surface temperature.

10. The method according to any one of claims 1 to 9, further comprising a step of measuring an ambient temperature and applying said charging current to the rechargeable battery cell also according to the measured ambient temperature.

11. The method according to any one of claims 1 to 10, wherein the model considers the type rechargeable battery cell, including one of a cylindrical cell type, a pouch cell type and a prismatic cell type.

12. The method according to any one of claims 1 to 11, wherein the model considers internal gradients of the degradation and/or temperature.

13. The method according to any one of claims 1 to 12, wherein the model is calculated in three spatial dimensions.

14. The method according to any one of claims 1 to 13, wherein the rechargeable battery cell is a lithium ion cell.

15. A battery charger comprising a power supply operable to charge a rechargeable battery cell with a charging current according to a current-versus-time according to a current-versus-time-profile, and a processor operable to perform a method according to any one of claims 1 to 14 to obtain said current-versus-time-profile.

251699

Fig. 1

Fig. 2

(a)

(b)

(c)

301    302    303

251699

Electrical ECN unit    Thermal ECN unit    312

311

$R_0$ $R_1$ $R_2$ $R_3$ $E_s$
$C_1$ $C_2$ $C_3$

$c$ $R(\ )$

---

| | | |
|---|---|---|
| ⊸⊏⊐⊸ Electrical resistance | | ⊣⊢ Electrical capacitor (electrodes) |
| ⊸W⊸ Thermal resistance | | ⊣⊢ Voltage source (electrodes) |
| ⊏⊐ Thermal mass | | Hollow separator at core |
| ▦ Tab | | |

# Fig. 3

Start

Inputs
Geometry parameters
Number of nodes
Electrical parameters look up tables,
Thermal parameters
Electrical loads
Thermal boundary conditions, etc.

— 401

Preprocessing
Preparing battery classes, auxiliary
functions and constant variables, etc.

— 402

Processing
Generating functions and internal
variables, etc.

— 403

Solver
Implicit and explicit, etc.

Cycle
ends?    N

Y

Cycles
end?    N

Y

Post-processing
Plotting figures and 3D visualization

End

Fig. 4

## Fig. 5

OBTAINING
INFORMATION ON
CELL SERIES TYPE    — S100

OBTAINING
SETPOINT INPUT    — S200

OBTAINING
MODEL $I(t)$-PROFILE    — S300

APPLYING
CHARGING
CURRENT    — S400

251699

Europäisches
Patentamt

European
Patent Office

Office européen
des brevets

# EUROPEAN SEARCH REPORT

Application Number

EP 23 17 4507

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/062415 A1 (BARSUKOV YEVGEN [US] ET AL) 6 March 2014 (2014-03-06) | 1-5,8-15 | INV. H02J7/00 |
| Y | * paragraphs [0026], [0030], [0061], [0063], [0065], [0069], [0071], [0072], [0075] * | 6,7 | |
| A | US 2019/006871 A1 (BARSUKOV YEVGEN PAVLOVICH [US] ET AL) 3 January 2019 (2019-01-03) * paragraph [0020] * | 1-15 | |
| Y | LI SHEN ET AL: "Optimal cell tab design and cooling strategy for cylindrical lithium-ion batteries", JOURNAL OF POWER SOURCES, ELSEVIER, AMSTERDAM, NL, vol. 492, 18 February 2021 (2021-02-18), XP086521623, ISSN: 0378-7753, DOI: 10.1016/J.JPOWSOUR.2021.229594 [retrieved on 2021-02-18] | 6,7 | |
| A | * the whole document * | 1-5,8-15 | |

**TECHNICAL FIELDS SEARCHED (IPC)**

H02J

The present search report has been drawn up for all claims

| Place of search | Date of completion of the search | Examiner |
|---|---|---|
| Munich | 2 November 2023 | Varela Fraile, Pablo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 17 4507**

This annex lists the patent family members relating to the patent documents cited in the above-mentioned European search report.
The members are as contained in the European Patent Office EDP file on
The European Patent Office is in no way liable for these particulars which are merely given for the purpose of information.

**02-11-2023**

| Patent document cited in search report | Publication date | Patent family member(s) | | Publication date |
|---|---|---|---|---|
| US 2014062415 A1 | 06-03-2014 | CN | 104584376 A | 29-04-2015 |
| | | US | 2014062415 A1 | 06-03-2014 |
| | | WO | 2014036527 A1 | 06-03-2014 |
| US 2019006871 A1 | 03-01-2019 | CN | 107852011 A | 27-03-2018 |
| | | CN | 114142563 A | 04-03-2022 |
| | | US | 2017070061 A1 | 09-03-2017 |
| | | US | 2019006871 A1 | 03-01-2019 |
| | | US | 2020144833 A1 | 07-05-2020 |
| | | WO | 2017044796 A1 | 16-03-2017 |

EPO FORM P0459

For more details about this annex : see Official Journal of the European Patent Office, No. 12/82